(19) Europäisches Patentamt

European Patent Office

Office européen des brevets

(11) **EP 1 724 015 A1**

(12) **EUROPEAN PATENT APPLICATION**
published in accordance with Art. 158(3) EPC

(43) Date of publication:
22.11.2006 Bulletin 2006/47

(51) Int Cl.:
*B01J 35/02* (2006.01)   *B01J 27/04* (2006.01)
*B01J 37/20* (2006.01)

(21) Application number: 05720946.2

(22) Date of filing: 10.03.2005

(86) International application number:
**PCT/JP2005/004711**

(87) International publication number:
**WO 2005/087372 (22.09.2005 Gazette 2005/38)**

(84) Designated Contracting States:
DE GB

(30) Priority: 12.03.2004 JP 2004071071

(71) Applicant: TOHO TITANIUM CO., LTD.
Chigasaki-shi,
Kanagawa-ken 253-8510 (JP)

(72) Inventors:
• OHNO, Teruhisa
Kitakyushu-shi, Fukuoka 8080143 (JP)

• TAKEDA, Yutaka,
TOHO TITANIUM CO., LTD.
Chigasaki-shi, Kanagawa 2538510 (JP)
• KANO, Osamu,
TOHO TITANIUM CO., LTD.
Chigasaki-shi, Kanagawa 2538510 (JP)

(74) Representative: Fiesser, Gerold Michael
KNH Patentanwälte,
Kahlhöfer, Neumann, Herzog, Fiesser,
Isartorplatz 8
80331 München (DE)

(54) **TITANIUM OXIDE PHOTOCATALYST AND METHOD FOR PREPARATION THEREOF**

(57) A titanium oxide photocatalyst obtained by hydrolyzing or neutralizing with an alkali an aqueous solution of titanium chloride to obtain a solid component, incorporating sulfur or a sulfur-containing compound in any step of the process, and baking the solid containing the sulfur or sulfur-containing compound. The titanium oxide photocatalyst can be efficiently produced in an industrial production scale and has a high photocatalytic activity in a visible-light region.

EP 1 724 015 A1

**Description**

TECHNICAL FIELD

The present invention relates to a titanium oxide photocatalyst and a method for producing the same and, more particularly, to a visible-light response-type titanium oxide photocatalyst exhibiting high photocatalyst activity and effective in deleterious material decomposition or in a wet solar cell, and a method for efficiently producing the same industrially.

BACKGROUND ART

Titanium oxide powder has been used as a white pigment for many years. More recently, titanium oxide powder is widely used as a UV shielding material for cosmetics and the like, a material for forming a photocatalyst, capacitor, or thermistor, and a sintered material used for electronic materials, such as a raw material of barium titanate. Application of titanium oxide to a photocatalyst has been actively tried particularly in the past several years. Titanium oxide is excited when irradiated with light having energy greater than its band gap and produces electrons in the conduction band and positive holes in the valence band. Development of application of photocatalysts utilizing the reduction power of electrons and the oxidation power of positive holes is being actively undertaken. There are various applications of the titanium oxide photocatalyst. A number of application developments such as hydrogen production by decomposition of water, organic compound production by an oxidation-reduction reaction, exhaust gas treatment, air cleaning, deodorization, sterilization, antibacterial treatment, waste water treatment, stain-proofing of illumination equipment, and the like are ongoing.

However, because titanium oxide exhibits a large refractive index in a wavelength region near visible light, the titanium oxide absorbs almost no light in the visible-light region. This is because anatase-type titanium oxide has a band gap of 3.2 eV and rutile-type titanium oxide has a band gap of 3.0 eV Wavelength of light that titanium oxide can absorb is 385 nm or less in the case of anatase-type titanium oxide and 415 nm or less in the case of rutile-type titanium oxide. Most light having a wavelength in these ranges belongs to the ultraviolet region and is contained only in a small amount in sunlight infinitely existing on the earth. Although conventionally known titanium oxide photocatalyst exhibits photocatalytic performance under ultraviolet radiation, only a small part of the energy is used under sunlight. Therefore, sufficient activity as a photocatalyst cannot be expected. In addition, taking indoor use under fluorescent light or the like into consideration, titanium oxide cannot exhibit sufficient performance as a photocatalyst because major spectra of fluorescent light have wavelength of 400 nm or more. For this reason, development of a highly-active photocatalyst that can exhibit catalytic activity in a visible-light region and has a high usability is being undertaken.

For example, Patent Document 1 (Japanese Patent Application Laid-open No. 9-262482) discloses a photocatalyst comprising titanium oxide containing ions of one or more metals selected from the group consisting of Cr, V, Cu, Fe, Mg, Ag, Pd, Ni, Mn, and Pt incorporated into the titanium oxide from the surface toward the inside at a rate of $1 \times 10^{15}$ ions/g-$TiO_2$ or more. These ions are accelerated to a high energy of 30 keV or more and applied to titanium oxide to be introduced therein. Patent Document 2 (Japanese Patent Application Laid-open No. 11-290697) discloses a titanium oxide photocatalyst doped with a transition metal. The photocatalyst is prepared by a process comprising a step of holding a solid containing a transition metal and titanium oxide to be doped with the transition metal in a vacuum chamber and a step of generating metal plasma in the vacuum chamber and irradiating the titanium oxide with the metal plasma. These methods, however, are not suitable for industrial scale production due to requirements for accelerating a metal ion to a high energy level and the necessity of using a very special apparatus such as a metal plasma generator in order to dope the titanium oxide with a metal ion.

To solve these problems, Patent Document 3 (Japanese Patent Application Laid-open No. 12-237598) discloses a method for producing a visible-light responsive-type photocatalyst comprising a first step of providing a semiconductor such as titanium oxide and causing a medium containing at least one cation selected from the group consisting of B, P, T, V, Cr, Mn, Fe, Co, Ni, Cu, Zn, Ga, Zr, Nb, Mo, Pd, Ag, Cd, Sn, Sb, Hf, Ta, W, Pt, Hg, Pb, Bi, Pr, Nd, Pm, Sm, Eu, Gd, Tb, Dy, Ho, Er, Tm, Yb, and Lu which are different from the components of the semiconductor to come into contact with the surface of the semiconductor to incorporate the cations in the semiconductor, and a second step of heating the semiconductor containing the cations in a reducing atmosphere. However, because the photocatalyst in which the titanium oxide is doped with metal ions does not necessarily have sufficient catalytic activity, further improvement of the method has been desired.

In addition to these photocatalysts in which the titanium oxide is doped with a metal ion such as a transition metal ion in order to cause the photocatalyst to exhibit catalytic activity in the visible-light region, Patent Document 4 (WO 01/010552) discloses a photocatalyst substance exhibiting photocatalytic activity in a visible-light region and possessing a Ti-O-N structure by incorporation of nitrogen into titanium oxide crystals. The photocatalyst is obtained by replacing part of the oxygen sites in titanium oxide crystals with nitrogen atoms, by causing lattices of titanium oxide crystals to be doped with nitrogen atoms, or by causing titanium oxide crystal grain boundaries to be doped with nitrogen atoms, or a combination of any of these. Although sputtering titanium oxide in a nitrogen gas atmosphere is one method for producing such a photocatalyst component, it is difficult to apply this method to industrial scale production due to high production cost. A simple method of baking titanium oxide in an ammonia atmosphere has been disclosed. However, because the titanium oxide can be doped only insufficiently with nitrogen atoms, the catalytic activity of the resulting photocatalyst is insufficient.

(Patent Document 1) Japanese Patent Application Laid-open No. 9-262482
(Patent Document 2) Japanese Patent Application Laid-open No. 11-290697
(Patent Document 3) Japanese Patent Application Laid-open No. 12-237598
(Patent Document 4) WO 01/010552

Therefore, an object of the present invention is to provide a highly active and low cost titanium oxide photocatalyst exhibiting photocatalyst activity in a visible-light region, and a method for producing the same efficiently in an industrial production scale.

DISCLOSURE OF THE INVENTION

In view of this situation, the inventor of the present invention has conducted extensive studies and, as a result, has found that a titanium oxide photocatalyst obtained by baking a mixture of a solid, obtained from a titanium chloride aqueous solution such as a titanium tetrachloride aqueous solution and sulfur or a sulfur-containing compound, exhibits high photoabsorption characteristics in a visible-light region. This finding has led to the completion of the present invention.

Specifically, the present invention provides a titanium oxide photocatalyst obtained by hydrolyzing or neutralizing with an alkali an aqueous solution of titanium chloride to obtain a solid component, incorporating sulfur or a sulfur-containing compound in any step of the process, and baking the solid containing the sulfur or sulfur-containing compound.

The present invention further provides a method for producing a titanium oxide photocatalyst comprising hydrolyzing or neutralizing with an alkali an aqueous solution of titanium chloride to obtain a solid component, incorporating sulfur or a sulfur-containing compound in any step of the process, and baking the solid containing the sulfur or sulfur-containing compound.

The present invention also provides a dispersion of titanium oxide obtained by dispersing powder of the titanium oxide photocatalyst in a solvent.

BRIEF DESCRIPTION OF THE DRAWINGS

Figure 1 shows the result of measuring a diffusion-reflection absorption spectrum of a titanium oxide photocatalyst by spectrophotometer for ultraviolet and visible region.

BEST MODE FOR CARRYING OUT THE INVENTION

The titanium oxide photocatalyst of the present invention can be obtained by hydrolyzing or neutralizing with an alkali an aqueous solution of titanium chloride to obtain a solid component, incorporating sulfur or a sulfur-containing compound in any step of the process, and baking the solid containing the sulfur or sulfur-containing compound. The aqueous solution of titanium chloride used in the present invention is an aqueous solution of titanium trichloride or titanium tetrachloride. The aqueous solution of titanium trichloride can be obtained by dissolving metal titanium in hydrochloric acid, for example. As metal titanium, titanium powder, sponge-like titanium, or titanium scraps such as a cut powder can be used. The aqueous solution of titanium tetrachloride can be obtained by dissolving titanium tetrachloride in water or hydrochloric acid. Although the concentration of titanium chloride in the aqueous solution is optional, a concentration of titanium in a range of 1-20 wt%, preferably 1-10 wt%, and still more preferably 2-5 wt% is used, if production efficiency, the particle size of the resulting titanium oxide powder, and the like are taken into consideration. The aqueous solution of titanium chloride preferably has a high purity and contains impurities in as small an amount as possible, specifically, the content of aluminum, iron, and vanadium is respectively not more than 1 ppm and the content of silicon and tin is respectively not more than 10 ppm.

The aqueous solution of titanium chloride is hydrolyzed or neutralized with an alkali to obtain a solid. This solid is a powder or colloid of rutile-type or anatase-type titanium oxide, orthotitanic acid, metatitanic acid, titanium hydroxide, or titanium oxide hydrate. Crystal and other form of the solid are the same irrespective of including of sulfur or a sulfur compound. As a specific method for obtaining such a solid, the following methods can be given.

(1) A method of heating an aqueous solution of titanium chloride while refluxing to hydrolyze the titanium chloride and deposit a solid. Although chlorine gas is generated in the reaction, fine particulate titanium oxide powder can be obtained by controlling chlorine gas generation by means of a reaction under pressure, or by using a refluxing vessel and hydrolyzing in a low pH region.

(2) A method of adding an alkali such as ammonia to an aqueous solution of titanium chloride to deposit a solid. Use of ammonia or ammonia water free from a metal component is preferable.

(3) A method of adding an aqueous solution of titanium chloride to an alkali aqueous solution such as ammonia water to deposit a solid.

When the aqueous solution of titanium chloride is hydrolyzed or neutralized in this manner, orthotitanic acid or metatitanic acid is obtained. Hydrolysis or neutralization of the aqueous solution of titanium chloride under the conditions of producing metatitanic acid is preferable for promoting photocatalytic activity. The solid product is then washed in order to remove impurities such as hydrochloric acid or alkaline components and, as required, separated and dried to obtain a powder. The solid product is further dried in order to remove water such as crystal water, as required. As a method of separation of the solid product, filtration using a filter or a filter press, decantation, centrifugation, and the like can be used. As a drying method, a method that can prevent aggregation of solid particles is preferable. A spray dryer or a commercially available dryer can be used. The resulting solid may be mixed with sulfur or a sulfur-containing compound in a suspended state without drying, or may be sent to a baking step.

When the solution of titanium chloride is neutralized with hydroxide of alkali metal or alkaline earth metal such as NaOH, KOH, or $Ca(OH)_2$ (lime hydrate) in the above method (2), these metal components may remain in the resulting titanium oxide powder. These metal components do not significantly affect the characteristics of the ultimately produced photocatalyst. A lime hydrate solution is added to an aqueous solution of titanium chloride, for example, to neutralize the titanium chloride and to obtain a suspension of titanium oxide hydrate. An agglutinant such as poly aluminium chloride is added to this suspension to cause a solid component to precipitate. This method is commonly used for wastewater treatment such as treatment of acidic water and the like, and can produce titanium oxide powder very efficiently on an industrial scale.

Characteristics such as catalytic activity of the ultimately produced titanium oxide photocatalyst can be promoted by producing a solid product by hydrolyzing the aqueous solution of titanium chloride in the presence of ammonium sulfate. In addition, characteristics such as catalytic activity of the ultimately produced titanium oxide photocatalyst can be promoted by producing a solid product by hydrolyzing the aqueous solution of titanium chloride in the presence of ammonium sulfate and neutralizing the resulting hydrolysis reaction product with ammonia.

Moreover, the titanium oxide crystal form of the ultimately produced titanium oxide photocatalyst can be controlled when producing a solid product by neutralization or hydrolysis of the aqueous solution of titanium chloride. The crystal form of titanium oxide includes rutile-type, anatase-type, and a mixed crystal form of these types. The titanium oxide crystal form (ratio of rutile to anatase) is controlled according to the application of the photocatalyst. The ratio of rutile to anatase of titanium oxide powder can be controlled by the neutralization time or neutralization rate when the aqueous solution of titanium chloride is hydrolyzed or neutralized with an alkali. For example, when an aqueous solution of titanium tetrachloride is neutralized using ammonia water or the like, antatase-rich titanium oxide with a low ratio of rutile to anatase is obtained if neutralized in a short period of time. If the neutralization reaction speed is slow, titanium oxide with a high ratio of rutile to anatase can be obtained. The neutralization rate, in terms of the amount (g) of titanium atom per minute, is preferably 50-500 g/min, and more preferably 100-300 g/min. If the neutralization rate is less than 200 g of titanium atom per minute, titanium oxide with a ratio of rutile to anatase of 50% or more can be obtained. The ratio of rutile to anatase of titanium oxide can also be controlled by adjusting the pH of the reaction system when the aqueous solution of titanium chloride is hydrolyzed or neutralized. For example, if a suspension containing titanium oxide powder is aged under low pH conditions, the ratio of rutile to anatase is increased and a mixed crystal containing rutile-type and antatase-type crystals can be obtained.

Moreover, the average particle diameter, specific surface area, and crystal form of the solid product obtained in this manner can be controlled according to the conditions of hydrolysis or neutralization. A large specific surface area is preferable to promote activity of the photocatalyst. Specifically, such a solid product has a BET specific surface area of 50 $m^2/g$ or more, preferably 100 $m^2/g$ or more, and particularly preferably 150-300 $m^2/g$. Fine particles of titanium oxide of rutile-type crystals, anatase-type crystals, or mixed crystals of rutile-type and anatase-type having a specific surface area of 50 $m^2/g$ or more are preferable.

As the step of incorporating sulfur or a sulfur-containing compound in the present invention, the step before preparing a solid component, the step of depositing a solid component, and a step after depositing a solid component can be mentioned. Of these, a step of incorporating in an aqueous solution of titanium chloride of the raw material, or a step of incorporating in the deposited solid component is preferable.

The sulfur-containing compound used in the present invention is preferably a compound which is liquid or solid at normal temperatures and includes sulfur-containing inorganic compounds, sulfur-containing organic compounds, metal sulfides, and the like. Specifically, thioethers, thioureas, thioamides, thioalcohols, thioaldehydes, thiazyls, mercaptals, thiols, and thiocyanates can be given. As specific sulfur-containing compounds, thiourea, dimethylthiourea, sulfoacetic acid, thiophenol, thiophene, benzothiophene, dibenzothiophene, thiobenzophenone, bithiophene, phenothiazine, sulfolane, thiazine, thiazole, thiadiazole, thiazoline, thiazolidine, thianthrene, thiane, thioacetanilide, thioacetamide, thiobenzamide, thioanisole, thionine, methyl thiol, thioether, thiocyanogen, sulfuric acid, sulfonic acid, sulfonium salt, sulfonamide, sulfinic acid, sulfoxide, sulfine, sulfane, and the like can be given. These sulfur-containing compounds can be used either individually or in combination of two or more.

Of the above-mentioned compounds, sulfur-containing organic compounds are preferable, and organic compounds which contain a sulfur atom and nitrogen atom, but do not contain an oxygen atom, are particularly preferable. Specifically, thiourea and dimethylthiourea are preferable.

As specific example of the method for preparing such a mixture of the solid component and sulfur or a sulfur-containing compound, the following methods can be given. (1) A method of incorporating sulfur or a sulfur-containing compound in an aqueous solution of titanium chloride, followed by hydrolysis or neutralization with an alkali, to obtain a mixture of a solid component and the sulfur or sulfur-containing compound. (2) A method of hydrolyzing or neutralizing with an alkali an aqueous solution of titanium chloride to obtain a solid component and incorporating sulfur or a sulfur-containing compound to obtain a mixture of the solid component and the sulfur or sulfur-containing compound. (3) A method of hydrolyzing or neutralizing with an alkali an aqueous solution of titanium chloride to obtain a solid component, baking the resulting solid component, and incorporating sulfur or a sulfur-containing compound to obtain a mixture of the solid component and the sulfur or sulfur-containing compound. (4) A method of incorporating sulfur or a sulfur-containing compound in an aqueous solution of titanium chloride, followed by hydrolysis or neutralization with alkali to form a solid component, and further incorporating the sulfur or sulfur-containing compound in the solid component to obtain a mixture of the solid component and the sulfur or sulfur-containing compound..

The amount of the sulfur or sulfur-containing compound to be incorporated in the solid in the present invention, in terms of a sulfur atom content to the solid component, is usually 1 wt% or more, preferably 5 wt% or more, and particular preferably 10-30 wt%. If the amount of the sulfur or sulfur-containing compound is too small, the sulfur atom content ultimately contained in the titanium oxide photocatalyst is too small for visible light to be sufficiently absorbed.

The sulfur or sulfur-containing compound may be mixed either in the form of a solid or liquid, or may be added after dissolving or suspending in a solvent such as purified water or alcohol. In the latter case, the sulfur or sulfur-containing compound is homogeneously dispersed in the solid component, resulting in a high performance titanium oxide photocatalyst uniformly doped with the sulfur atom.

The mixture of the solid component and the sulfur or sulfur-containing compound obtained in this manner is then baked at a temperature of 200-800°C, preferably 300-600°C, and more preferably 400-500°C, to obtain a titanium oxide photocatalyst. When a sulfur-containing organic compound is used, the baking temperature should be high enough to decompose the sulfur-containing compound, release sulfur atoms, and cause the released sulfur atoms to be replaced with titanium atoms in the solid component. Baking is carried out in an oxidizing atmosphere such as air or oxygen, a reducing atmosphere such as hydrogen gas or ammonia gas, an inert atmosphere such as nitrogen gas or argon gas, or under vacuum. Among these, a reducing atmosphere such as hydrogen gas is preferable to promote photocatalytic activity in a visible-light region. Although a reducing gas such as hydrogen can be used, the solid component may be baked in a mixed gas atmosphere such as a mixed gas of hydrogen and oxygen or a mixed gas of hydrogen, oxygen, and inert gas. In addition, in order to prevent sulfur from being discharged from the baking furnace by vaporization of sulfur or decomposition of the sulfur-containing compounds, a baking atmosphere should maintain a certain degree of partial pressure of sulfur components. In case of using a sulfur-containing organic compound containing carbon atoms which decomposes and generates byproduct gas such as carbon oxide during baking, some amount of such a byproduct gas is preferably discharged from the baking atmosphere. Therefore, the baking furnace should be neither a complete open type nor closed type, but should preferably have a structure to which a certain degree of pressure can be applied and which can discharge byproduct gas, such as a cylindrical, dish-like, or rectangular container equipped with a nonfixing type cover on the open upper part.

The titanium oxide photocatalyst obtained in the above-described manner is washed to remove free sulfur components and other components, as required. In addition, the surface of titanium oxide particles may be treated with a surfactant or the like to increase dispersibility of the particles.

The titanium oxide photocatalyst obtained in this manner is a pale yellow or yellow powder of titanium oxide containing sulfur atoms, including sulfur atoms contained in titanium oxide by replacing titanium atoms as cations in the titanium oxide. A specific structure is represented by a chemical formula of $Ti_{1-x}S_xO_2$, wherein x, which indicates the sulfur atom content per titanium atom, is 0.0001 or more, preferably 0.0005 or more, and more preferably 0.001-0.008. The sulfur atoms include not only those contained in titanium oxide as cations, but also those adsorbed on the surface of titanium oxide particles as sulfur oxide or sulfur molecules, as well as those contained in crystal grain boundaries of titanium oxide. The content of the sulfur component in the ultimately obtained titanium oxide photocatalyst is 0.01 wt% or more, preferably 0.01-3 wt%, and particularly preferably 0.03-1 wt%, as sulfur atom. The average particle diameter of primary particles determined by SEM photographic picture image inspection is 5-50 nm, and the BET specific surface area is 100-250 m$^2$/g.

The titanium oxide photocatalyst excels in absorptivity of visible light. Assuming that the integration value of absorbance of light with a wavelength of 300-350 nm is 1, when the ultraviolet visible diffusion-reflection spectrum is measured, the integration value of absorbance of light with a wavelength of 350-400 nm is usually 0.3-0.9 and the integration value of absorbance of light with a wavelength of 400-500 nm is 0.3-0.9, preferably the integration value of absorbance of light with a wavelength of 350-400 nm is 0.4-0.8 and the integration value of absorbance of light with a wavelength of 400-500 nm is 0.4-0.8, and more preferably the integration value of absorbance of light with a wavelength of 350-400 nm is 0.5-0.7 and the integration value of absorbance of light with a wavelength of 400-500 nm is 0.5-0.75.

In the titanium oxide photocatalyst of the present invention, the crystal form of the titanium oxide is rutile-type, anatase-type, or a mixture of rutile-type and anatase-type, and the crystals contain sulfur atoms. Preferably, the titanium oxide is a mixture of rutile-type crystals and anatase-type crystals, with a ratio of rutile to anatase of 5-99%, and preferably 20-80%, and more preferably 30-70%. Although the titanium oxide photocatalyst of the present invention is a mixture of rutile-type crystals and anatase-type crystals, the titanium oxide may further contain amorphous titanium oxide.

The ratio of rutile to anatase can be determined by measuring the X-ray diffraction pattern according to the method of ASTM D 3720-84, in which the peak area (Ir) of the strongest interference line (index of plane 110) of rutile-type crystal titanium oxide and the peak area (Ia) of the strongest interference line (index of plane 101) of titanium oxide powder are measured, and applying the results to the following formula.

$$\text{Ratio of rutile to anatase (wt\%)} = 100 - 100/(1 + 1.2 \times Ir/Ia)$$

In the formula, the peak areas (Ir) and (Ia) refer to the areas projecting from the baseline in the applicable diffraction line of the X-ray diffraction spectrum. These areas are determined by a known method such as a computer calculation, an approximation triangle-formation method, or the like.

There are no specific limitations to the form in which the titanium oxide photocatalyst of the present invention is used. A titanium oxide powder, titanium oxide dispersion, and the like can be given as examples. The titanium oxide dispersion comprises the titanium oxide photocatalyst powder dispersed in a medium such as water or an organic solvent and may contain a known dispersion agent and other optional components. The titanium oxide dispersion is preferably used as a dispersion liquid, a coating fluid, or a paint, because the titanium oxide photocatalyst is coated to a substrate to form a photocatalyst layer in common applications of a photocatalyst such as exhaust gas treatment, deodorization, and antifouling. Since an environmentally-friendly aqueous-type coating agent or paint is demanded to cope with the sick house syndrome problem caused by acetaldehyde and the like in recent years, the use of the titanium oxide photocatalyst of the present invention as an aqueous dispersion or paint is desirable.

The titanium oxide photocatalyst of the present invention obtained in the above-described manner excels in absorptivity of light in the visible-light region and can exhibit sufficient photocatalytic activity responding to a light source from sunlight and indoor fluorescent light without a light source of special ultraviolet radiation such as black light. Moreover, because the titanium oxide photocatalyst of the present invention can be efficiently produced at a low cost as compared with conventional visible-light responsive photocatalyst, e.g. titanium oxide doped with nitrogen atoms, the titanium oxide photocatalyst is industrially very advantageous and can be widely used in photocatalyst paints, photocatalyst coating materials, and the like for exhaust gas treatment, air cleaning, deodorization, sterilization, antibacterial treatment, waste water treatment, stain-proofing of illumination equipment, photocatalyst equipment utilizing the capability of decomposing deleterious materials by an oxidation effect, and the like.

The present invention will be described in more detail by examples, which should not be construed as limiting the present invention.

EXAMPLE

In the following Examples and Comparative Examples, titanium oxide photocatalysts were evaluated as follows.

(1) Measurement of sulfur content of titanium oxide photocatalyst

The sulfur atom content of titanium oxide was quantitatively analyzed using a field emission-type scanning electron microscope (Field Emission-SEM: FE-SEM, "Hitachi electronic scan microscope S-4700") equipped with an energy distributed X-ray fluorescence analyzer (EDX).

(2) Measurement of ratio of rutile to anatase

The ratio of rutile to anatase was determined by measuring the X-ray diffraction pattern according to the method of ASTM D 3720-84, in which the peak area (Ir) of the strongest interference line (index of plane 110) of rutile-type crystal titanium oxide and the peak area (Ia) of the strongest interference line (index of plane 101) of titanium oxide powder were measured, and applying the results to the above-described formula. The X-ray diffraction analysis conditions were as follows.

(X-ray diffraction measurement conditions)

Instrument: RAD-1C (manufactured by Rigaku Corp.)
X-ray tube ball: Cu
Tube voltage and tube current: 40 kV, 30 mA
Slit: DS-SS: 1°, RS: 0.15 mm
Monochrometer: graphite
Measurement interval: 0.002°
Counting method: Scheduled counting method

(3) Measurement of visible-light absorptivity

The diffusion-reflection absorption spectrum of the titanium oxide photocatalyst was measured using a spectrophotometer for UV-light and visible-light regions equipped with an integrating sphere ("V-550-DS" manufactured by JASCO Corp.).

(4) Isopropyl alcohol (IPA) decomposition capability

A 10 ml glass flask equipped with a stirrer was charged with 5 ml of isopropyl alcohol solution in acetonitrile at an initial concentration of 50 mmol/l, followed by the addition of 0.1 g of titanium oxide photocatalyst powder. The mixture was irradiated with light with a wavelength of 410 nm or more thorough a filter while stirring. A small amount of sample of the isopropyl alcohol solution in acetonitrile was collected after one hour, two hours, and five hours to measure the isopropyl alcohol concentration by gas chromatography. The decomposition performance was indicated as a percent of the concentration to the initial concentration.

(5) Methylene blue (MB) decomposition capability

A 150 ml glass flask equipped with a stirrer was charged with 100 ml of an aqueous solution of methylene blue at an initial concentration of 50 $\mu$mol/l, followed by the addition of 0.2 g of titanium oxide photocatalyst powder. The solution was adjusted to pH 3 with hydrochloric acid and stirred for 12 hours or more while shielding from light. A small amount of the methylene blue solution was collected to measure methylene blue concentration using a spectrophotometer. The resulting value was taken as an initial concentration. Then, the solution was irradiated with light with a wavelength of 410 nm or more thorough a filter while stirring. A small amount of sample of the methylene blue solution was collected after one hour, two hours, and five hours to measure the methylene blue concentration using a spectrophotometer. The decomposition performance was indicated as a percent of the concentration to the initial concentration.

Example 1

A 1000 ml round bottom flask equipped with a stirrer was charged with 297 g of an aqueous solution of titanium tetrachloride with a titanium concentration of 4 wt%, followed by heating at 60°C. Ammonia water was instantaneously added to neutralize and maintain the reaction system at pH 7.4. Then, the solution was maintained at 60°C for one hour to obtain a solid of metatitanic acid. The solid was collected by filtration and washed with purified water. 9.7 g of thiourea dissolved in 100 ml of purified water was added and the mixture was stirred for 30 minutes. The solid was dried at 60°C and ground in a ball mill to obtain a mixture of titanium oxide powder and thiourea. An alumina crucible was filled with the mixture and placed, without a lid, in a baking furnace to bake the mixture at 400°C for three hours in air containing 3 vol% of hydrogen. The resulting solid was ground in a ball mill, washed with purified water, and dried at 60°C to obtain a pale yellow titanium oxide photocatalyst. The sulfur content of the resulting titanium oxide photocatalyst was 0.25 wt%, the ratio of rutile to anatase was 10%, and the specific surface area was 180 $m^2/g$. The visible-light absorptivity is shown in Figure 1. The isopropyl alcohol (IPA) decomposition capability and methylene blue (MB) decomposition capability are shown in Table 1. The same evaluation of decomposition capability of IPA and MB was carried out in the following Examples and Comparative Examples.

Example 2

A 1000 ml round bottom flask equipped with a stirrer was charged with 297 g of an aqueous solution of titanium tetrachloride with a titanium concentration of 4 wt%, followed by the addition of 9.7 g of thiourea dissolved in 100 ml of purified water. The mixture was heated to 60°C. Next, ammonia water was added over 10 minutes to neutralize and maintain the reaction system at pH 7.4. The solution was maintained at 60°C for one hour to obtain a solid of metatitanic acid. The resulting solid was collected by filtration, washed with purified water, and stirred for 30 minutes. The solid was dried at 60°C and ground in a ball mill to obtain a mixture of titanium oxide powder and thiourea. The mixture was placed in a baking furnace and baked at 400°C for three hours in an atmosphere equivalent to that used in Example 1. The resulting solid was ground in a ball mill, washed with purified water, and dried at 60°C to obtain a pale yellow titanium oxide photocatalyst. The sulfur content of the resulting titanium oxide photocatalyst was 0.05 wt%, the ratio of rutile to anatase was 60%, and the specific surface area was 170 $m^2/g$. The visible-light absorptivity is shown in Figure 1.

Example 3

A 1000 ml round bottom flask equipped with a stirrer was charged with 297 g of an aqueous solution of titanium tetrachloride with a titanium concentration of 4 wt%, followed by the addition of 9.7 g of thiourea dissolved in 100 ml of purified water. The mixture was heated to 60°C. Next, ammonia water was added over 10 seconds to neutralize and maintain the reaction system at pH 7.4. The solution was maintained at 60°C for one hour to obtain a solid of metatitanic acid. The resulting solid was collected by filtration, washed with purified water, and stirred for 30 minutes. After drying the solid at 60°C, 9.7 g of thiourea solid was added and mixed. The mixture was ground in a ball mill to obtain a mixture of titanium oxide powder and thiourea. An alumina crucible was filled with the mixture and a lid was placed thereon (a space between the lid and crucible was 0.1-1 mm). The crucible was placed in a baking furnace to bake the mixture at 400°C for three hours in air. The resulting solid was ground in a ball mill, washed with purified water, and dried at 60°C to obtain a pale yellow titanium oxide photocatalyst. The sulfur content of the resulting titanium oxide photocatalyst was 0.30 wt%, the ratio of rutile to anatase was 55%, and the specific surface area was 180 $m^2/g$.

Example 4

A 1000 ml round bottom flask equipped with a stirrer was charged with 297 g of an aqueous solution of titanium tetrachloride with a titanium concentration of 4 wt%, followed by heating at 60°C. Ammonia water was instantaneously added to make the reaction system pH 7.4. The solution was neutralized at 60°C for one hour, thereby obtaining a solid of metatitanic acid. The resulting solid was collected by filtration, washed with purified water, and dried using a spray drier. 9.7 g of solid thiourea was added to and mixed with the resulting solid. Next, the mixture of the solid and the thiourea was ground in a ball mill to obtain a mixture of titanium oxide powder and thiourea. The mixture was placed in a baking furnace and baked at 400°C for three hours in an atmosphere equivalent to that used in Example 1. The resulting solid was ground in a ball mill, washed with purified water, and dried at 60°C to obtain a pale yellow titanium oxide photocatalyst. The sulfur content of the resulting titanium oxide photocatalyst was 0.18 wt%, the ratio of rutile to anatase was 10%, and the specific surface area was 150 $m^2/g$.

Example 5

A titanium oxide photocatalyst was prepared in the same manner as in Example 4, except that 9.7 g of thiourea solid dissolved in 100 ml of purified water was added to the solid of metatitanic acid, instead of adding 9.7 g of thiourea solid, and the mixture was stirred for 30 minutes and dried at 60°C. The sulfur content of the resulting titanium oxide photocatalyst was 0.17 wt%, the ratio of rutile to anatase was 10%, and the specific surface area was 150 $m^2/g$.

Example 6

A 1000 ml round bottom flask equipped with a stirrer was charged with 297 g of an aqueous solution of titanium tetrachloride with a titanium concentration of 4 wt%, followed by the addition of 9.7 g of thiourea dissolved in 100 ml of purified water. The mixture was heated to 60°C. Ammonia water was instantaneously added to neutralize and maintain the reaction system at pH 7.4. The solution was maintained at 60°C for one hour to obtain a solid of metatitanic acid. The resulting solid was collected by filtration, washed with purified water, and stirred for 30 minutes. The solid was dried using a spray drier to obtain a mixture of the solid and the thiourea. The mixture was placed in a baking furnace and baked at 400°C for three hours in an atmosphere equivalent to that used in Example 1. The resulting solid was ground in a ball mill, washed with purified water, and dried at 60°C to obtain a pale yellow titanium oxide photocatalyst. The sulfur content of the resulting titanium oxide photocatalyst was 0.05 wt%, the ratio of rutile to anatase was 10%, and the specific surface area was 130 $m^2$/g.

Example 7

An experiment was carried out in the same manner as in Example 1, except that, instead of neutralizing the titanium tetrachloride aqueous solution with heating at 60°C and maintaining the solution at 60°C for one hour, the titanium tetrachloride aqueous solution was neutralized at 30°C and maintained at 30°C for one hour. The resulting solid was orthotitanic acid. The sulfur content of the resulting titanium oxide photocatalyst was 0.08 wt%, the ratio of rutile to anatase was 10%, and the specific surface area was 180 $m^2$/g.

Example 8

An experiment was carried out in the same manner as in Example 2, except that, instead of neutralizing the mixture of the titanium tetrachloride aqueous solution and thiourea aqueous solution with heating at 60°C and maintaining the solution at 60°C for one hour, the mixture of the titanium tetrachloride aqueous solution and thiourea aqueous solution was neutralized at 30°C and maintained at 30°C for one hour. The resulting solid was orthotitanic acid. The sulfur content of the resulting titanium oxide photocatalyst was 0.06 wt%, the ratio of rutile to anatase was 60%, and the specific surface area was 170 $m^2$/g.

Example 9

A 1000 ml round bottom flask equipped with a stirrer was charged with 297 g of an aqueous solution of titanium tetrachloride with a titanium concentration of 4 wt%. The titanium tetrachloride was heated to 70°C and hydrolyzed while stirring the solution at 70°C for one hour. The solid was collected by filtration and washed with purified water. 9.7 g of thiourea dissolved in 100 ml of purified water was added and the mixture was stirred for 30 minutes. The resulting solid was dried at 60°C and ground in a ball mill to obtain a mixture of titanium oxide powder and thiourea. The mixture was placed in a baking furnace and baked at 400°C for three hours in an atmosphere equivalent to that used in Example 1. The resulting solid was ground in a ball mill, washed with purified water, and dried at 60°C to obtain a pale yellow titanium oxide photocatalyst. The sulfur content of the resulting titanium oxide photocatalyst was 0.16 wt%, the ratio of rutile to anatase was 30%, and the specific surface area was 250 $m^2$/g.

Example 10

A 1000 ml round bottom flask equipped with a stirrer was charged with 297 g of an aqueous solution of titanium tetrachloride with a titanium concentration of 4 wt%, followed by the addition of 9.7 g of thiourea dissolved in 100 ml of purified water. The mixture was heated to 70°C to hydrolyze titanium tetrachloride while stirring at 70°C for one hour. The resulting solid was collected by filtration, washed with purified water, and stirred for 30 minutes. The solid was dried at 60°C and ground in a ball mill to obtain a mixture of titanium oxide powder and thiourea. The mixture was placed in a baking furnace and baked at 400°C for three hours in the same atmosphere as in Example 3. The resulting solid was ground in a ball mill, washed with purified water, and dried at 60°C to obtain a pale yellow titanium oxide photocatalyst. The sulfur content of the resulting titanium oxide photocatalyst was 0.08 wt%, the ratio of rutile to anatase was 30%, and the specific surface area was 250 $m^2$/g.

Example 11

A 1000 ml round bottom flask equipped with a stirrer was charged with 297 g of an aqueous solution of titanium tetrachloride with a titanium concentration of 4 wt%. After heating to 70°C, 0.5 g of ammonium sulfate was added. The titanium tetrachloride was hydrolyzed while stirring the mixture at 70°C for one hour. The resulting solid was collected by filtration and washed with purified water. 9.7 g of thiourea dissolved in 100 ml of purified water was added and the mixture was stirred for 30 minutes. The solid was dried at 60°C and ground in a ball mill to obtain a mixture of titanium oxide powder and thiourea. The mixture was placed in a baking furnace and baked at 400°C for three hours in an atmosphere equivalent to that used in Example 1. The baked solid was ground in a ball mill, washed with purified water, and dried at 60°C to obtain a pale yellow titanium oxide photocatalyst. The sulfur content of the resulting titanium oxide photocatalyst was 0.15 wt%, the ratio of rutile to anatase was 60%, and the specific surface area was 180 $m^2$/g.

Example 12

A 1000 ml round bottom flask equipped with a stirrer was charged with 297 g of an aqueous solution of titanium tetrachloride with a titanium concentration of 4 wt%. After heating to 70°C, 0.5 g of ammonium sulfate was added. The titanium tetrachloride was hydrolyzed while stirring the mixture at 70°C for one hour. After neutralizing the reaction solution with the addition of ammonia water, the resulting solid was collected by filtration and washed with purified water. 9.7 g of thiourea dissolved in 100 ml of purified water was added and the mixture was stirred for 30 minutes. The solid was dried at 60°C and ground in a ball mill to obtain a mixture of titanium oxide powder and thiourea. The mixture was placed in a baking furnace and baked at 400°C for three hours in an atmosphere equivalent to that used in Example 1. The resulting solid was ground in a ball mill, washed with purified water, and dried at 60°C to obtain a pale yellow titanium oxide photocatalyst. The sulfur content of the resulting titanium oxide photocatalyst was 0.18 wt%, the ratio of rutile to anatase was 60%, and the specific surface area was 180 $m^2$/g.

Example 13

A 1000 ml round bottom flask equipped with a stirrer was charged with 297 g of an aqueous solution of titanium tetrachloride with a titanium concentration of 4 wt%, followed by the addition of 9.7 g of thiourea dissolved in 100 ml of purified water. The mixture was stirred for 30 minutes and heated to 70°C, followed by the addition of 0.5 g of ammonium sulfate to hydrolyze titanium tetrachloride while stirring at 70°C for one hour. The solid obtained was collected by filtration, washed with purified water, dried at 60°C, and ground in a ball mill to obtain a mixture of titanium oxide powder and thiourea. The mixture was placed in a baking furnace and baked at 400°C for three hours in the same atmosphere as in Example 3. The resulting solid was ground in a ball mill, washed with purified water, and dried at 60°C to obtain a pale yellow titanium oxide photocatalyst. The sulfur content of the resulting titanium oxide photocatalyst was 0.10 wt%, the ratio of rutile to anatase was 60%, and the specific surface area was 200 $m^2$/g.

Example 14

A 1000 ml round bottom flask equipped with a stirrer was charged with 297 g of an aqueous solution of titanium tetrachloride with a titanium concentration of 4 wt%, followed by heating at 60°C. Ammonia water was added over a period of one hour while maintaining the reaction system at pH 7.4 and 60°C to neutralize the reaction product, thereby obtaining a solid of metatitanic acid. The solid was collected by filtration and washed with purified water. 9.7 g of thiourea dissolved in 100 ml of purified water was added and the mixture was stirred for 30 minutes. The solid was dried at 60°C and ground in a ball mill to obtain a mixture of titanium oxide powder and thiourea. The mixture was placed in a baking furnace and baked at 400°C for three hours in an atmosphere equivalent to that used in Example 1. The baked solid was ground in a ball mill, washed with purified water, and dried at 60°C to obtain a pale yellow titanium oxide photocatalyst. The sulfur content of the resulting titanium oxide photocatalyst was 0.26 wt%, the ratio of rutile to anatase was 85%, and the specific surface area was 160 $m^2$/g.

Example 15

A 1000 ml round bottom flask equipped with a stirrer was charged with 300 ml of 3.3 mol/l ammonia water and heated at 60°C. 297 g of a titanium tetrachloride aqueous solution with a titanium concentration of 4 wt% was dripped over one hour to carry out a neutralization reaction, thereby obtaining a solid of metatitanic acid. The solid was collected by filtration and washed with purified water. 9.7 g of thiourea dissolved in 100 ml of purified water was added and the mixture was stirred for 30 minutes. The solid was dried at 60°C and ground in a ball mill to obtain a mixture of titanium oxide powder and thiourea. The mixture was placed in a baking furnace and baked at 400°C for three hours in an atmosphere equivalent to that used in Example 1. The resulting solid was ground in a ball mill, washed with purified water, and dried at 60°C to obtain a pale yellow titanium oxide photocatalyst. The sulfur content of the resulting titanium oxide photocatalyst was 0.18 wt%, the ratio of rutile to anatase was 80%, and the specific surface area was 120 $m^2$/g.

Example 16

A 1000 ml round bottom flask equipped with a stirrer was charged with 300 ml of 3.3 mol/l ammonia water and heated at 60°C. 297 g of a titanium tetrachloride aqueous solution with a titanium concentration of 4 wt% was dripped over one hour to carry out a neutralization reaction, thereby obtaining a solid of metatitanic acid. 9.7 g of thiourea was added and the mixture was stirred to obtain a solid. The solid was collected by filtration and washed with purified water. Then, 9.7 g of thiourea dissolved in 100 ml of purified water was added and the mixture was stirred for 30 minutes. The solid obtained was dried at 60°C and ground in a ball mill to obtain a mixture of titanium oxide powder and thiourea. The mixture was placed in a baking furnace and baked at 400°C for three hours in an atmosphere equivalent to that used in Example 1. The baked solid was ground in a ball mill, washed with purified water, and dried at 60°C to obtain a pale yellow titanium oxide photocatalyst. The sulfur content of the resulting titanium oxide photocatalyst was 0.06 wt%, the ratio of rutile to anatase was 80%, and the specific surface area was 120 m$^2$/g.

Example 17

A 1000 ml round bottom flask equipped with a stirrer was charged with 300 ml of 3.3 mol/l ammonia water and heated at 60°C. A mixture of 9.7 g of thiourea and 297 g of a titanium tetrachloride aqueous solution with a titanium concentration of 4 wt% was dripped over one hour to carry out a neutralization reaction, thereby obtaining a solid of metatitanic acid. The solid was collected by filtration and washed with purified water. 9.7 g of thiourea dissolved in 100 ml of purified water was added and the mixture was stirred for 30 minutes. The solid was dried at 60°C and ground in a ball mill to obtain a mixture of titanium oxide powder and thiourea. The mixture was placed in a baking furnace and baked at 400°C for three hours in an atmosphere equivalent to that used in Example 1. The resulting solid was ground in a ball mill, washed with purified water, and dried at 60°C to obtain a pale yellow titanium oxide photocatalyst. The sulfur content of the resulting titanium oxide photocatalyst was 0.30 wt%, the ratio of rutile to anatase was 80%, and the specific surface area was 140 m$^2$/g.

Comparative Example 1

A 1000 ml round bottom flask equipped with a stirrer was charged with 297 g of an aqueous solution of titanium tetrachloride with a titanium concentration of 4 wt%, followed by heating at 60°C. Ammonia water was added to maintain the reaction system at pH 7.4. The solution was neutralized at 60°C for one hour. The resulting solid was collected by filtration, washed with purified water, and stirred for 30 minutes. The solid was dried at 60°C and ground in a ball mill to obtain a titanium oxide powder. An alumina crucible was filled with the titanium oxide powder and placed, without a lid, in a baking furnace to bake the titanium oxide powder at 400°C for three hours in an ammonia atmosphere while introducing ammonia gas. The resulting solid was ground in a ball mill, washed with purified water, and dried at 60°C to obtain a pale yellow titanium

oxide photocatalyst. The specific surface area of the resulting titanium oxide was 160 m$^2$/g. The visible-light absorptivity is shown in Figure 1.

Comparative Example 2

A 1000 ml round bottom flask equipped with a stirrer was charged with 500 ml of ethanol and heated at 40°C. 24.2 g of thiourea was added to and dissolved in the ethanol. Then, 26.2 ml of tetraisopropoxytitanium was added and the mixture was heated to 80°C while stirring to hydrolyze tetraisopropoxytitanium and to cause a solid to deposit. The solid obtained was dried at 60°C and ground in a ball mill to obtain a mixture of titanium oxide powder and thiourea. The mixture was placed in a baking furnace and baked at 400°C for three hours in an atmosphere equivalent to that used in Example 1. The resulting solid was ground in a ball mill, washed with purified water, and dried at 60°C to obtain a pale yellow titanium oxide photocatalyst. The specific surface area and the ratio of rutile to anatase of the resulting titanium oxide were 190 m$^2$/g and 0%, respectively.

TABLE 1

| | IPA decomposition capability (%) | | | MB decomposition capability (%) | | |
|---|---|---|---|---|---|---|
| | After 1 hour | After 2 hours | After 5 hours | After 1 hour | After 2 hours | After 5 hours |
| Example 1 | 65 | 50 | 25 | 70 | 55 | 30 |
| Example 2 | 70 | 55 | 30 | 70 | 60 | 35 |
| Example 3 | 70 | 50 | 25 | 70 | 55 | 30 |
| Example 4 | 55 | 35 | 15 | 60 | 45 | 20 |
| Example 5 | 60 | 40 | 20 | 55 | 35 | 15 |
| Example 6 | 70 | 50 | 25 | 70 | 50 | 25 |
| Example 7 | 80 | 65 | 45 | 80 | 65 | 40 |
| Example 8 | 80 | 70 | 55 | 80 | 70 | 50 |

(continued)

| | IPA decomposition capability (%) | | | MB decomposition capability (%) | | |
|---|---|---|---|---|---|---|
| | After 1 hour | After 2 hours | After 5 hours | After 1 hour | After 2 hours | After 5 hours |
| Example 9 | 60 | 45 | 25 | 70 | 55 | 30 |
| Example 10 | 60 | 50 | 25 | 70 | 55 | 30 |
| Example 11 | 55 | 50 | 20 | 70 | 55 | 30 |
| Example 12 | 50 | 30 | 10 | 50 | 30 | 10 |
| Example 13 | 50 | 40 | 10 | 60 | 40 | 10 |
| Example 14 | 55 | 35 | 15 | 55 | 40 | 30 |
| Example 15 | 70 | 60 | 50 | 60 | 50 | 30 |
| Example 16 | 70 | 50 | 35 | 60 | 45 | 30 |
| Example 17 | 65 | 45 | 30 | 55 | 40 | 20 |
| Comparative Example 1 | 95 | 85 | 80 | 95 | 90 | 80 |
| Comparative Example 2 | 85 | 75 | 65 | 90 | 85 | 70 |

The titanium oxide photocatalyst of the present invention obtained in the above-described manner has photocatalytic activity in the visible-light region and excels in decomposition capability of organic compounds such as IPA and MB.

INDUSTRIAL APPLICABILITY

The titanium oxide photocatalyst of the present invention can exhibit sufficient photocatalytic activity responding to fluorescent light or the like in a room not illuminated by sunlight due to its excellent photocatalytic activity not only in the UV-light region, but also in the visible-light region. Therefore, the titanium oxide photocatalyst has expanded the application area of the photocatalyst beyond the UV-light region.

**Claims**

1. A titanium oxide photocatalyst obtained by hydrolyzing or neutralizing with an alkali an aqueous solution of titanium chloride to obtain a solid component, incorporating sulfur or a sulfur-containing compound in any step of the process, and baking the solid containing the sulfur or sulfur-containing compound.

2. The titanium oxide photocatalyst according to claim 1, wherein the aqueous solution of titanium chloride is an aqueous solution of titanium trichloride or titanium tetrachloride.

3. The titanium oxide photocatalyst according to claim 1, wherein the alkali is ammonia or a metal hydroxide.

4. The titanium oxide photocatalyst according to claim 1, wherein the sulfur-containing compound is a sulfur-containing organic compound.

5. The titanium oxide photocatalyst according to claim 1, wherein the sulfur-containing compound is thiourea.

6. The titanium oxide photocatalyst according to claim 1, wherein the step of incorporating sulfur or a sulfur-containing compound is a step of incorporating in the aqueous solution of titanium chloride of the raw material, or a step of incorporating in the solid component.

7. The titanium oxide photocatalyst according to claim 1, having the integration value of absorbance of light with a wavelength of 350-400 nm of 0.3-0.9 and the integration value of absorbance of light with a wavelength of 400-500 nm of 0.3-0.9, assuming that the integration value of absorbance of light with a wavelength of 300-350 nm is 1, when the ultraviolet visible diffusion-reflection spectrum is measured.

8.  The titanium oxide photocatalyst according to claim 1, containing sulfur atoms in titanium oxide.

9.  The titanium oxide photocatalyst according to claim 1, wherein the sulfur atom is a cation.

10. The titanium oxide photocatalyst according to claim 1, wherein titanium oxide is a mixed crystal form of rutile-type and anatase-type, and contains sulfur atoms.

11. A method for producing a titanium oxide photocatalyst comprising hydrolyzing or neutralizing with an alkali an aqueous solution of titanium chloride to obtain a solid component, incorporating sulfur or a sulfur-containing compound in any step of the process, and baking the solid containing the sulfur or sulfur-containing compound.

12. The method for producing a titanium oxide photocatalyst according to claim 11, wherein the aqueous solution of titanium chloride is an aqueous solution of titanium trichloride or an aqueous solution of titanium tetrachloride.

13. The method for producing a titanium oxide photocatalyst according to claim 11, wherein the alkali is ammonia or a metal hydroxide.

14. The method for producing a titanium oxide photocatalyst according to claim 11, wherein the sulfur-containing compound is a sulfur-containing organic compound.

15. The method for producing a titanium oxide photocatalyst according to claim 11, wherein the sulfur-containing compound is thiourea.

16. The method for producing a titanium oxide photocatalyst according to claim 11, wherein the step of incorporating sulfur or a sulfur-containing compound is a step of incorporating in the aqueous solution of titanium chloride of the raw material, or a step of incorporating in the solid component.

17. The method for producing a titanium oxide photocatalyst according to claim 11, wherein the baking is carried out in a ruducing atmosphere.

18. The method for producing a titanium oxide photocatalyst according to claim 11, wherein the solid component is metatitanic acid or orthotitanic acid.

19. The method for producing a titanium oxide photocatalyst according to claim 11, wherein the aqueous solution of titanium chloride is hydrolyzed in the presence of ammonium sulfate to obtain a solid component.

20. The method for producing a titanium oxide photocatalyst according to claim 11, wherein the aqueous solution of titanium chloride is hydrolyzed in the presence of ammonium sulfate and neutralized with ammonia to obtain a solid component.

21. A dispersion of titanium oxide obtained by dispersing powder of the titanium oxide photocatalyst according to any one of claims 1 to 10 in a solvent.

| INTERNATIONAL SEARCH REPORT | International application No. |
|---|---|
| | PCT/JP2005/004711 |

**A. CLASSIFICATION OF SUBJECT MATTER**
Int.Cl⁷ B01J35/02, 27/04, 37/20

According to International Patent Classification (IPC) or to both national classification and IPC

**B. FIELDS SEARCHED**

Minimum documentation searched (classification system followed by classification symbols)
Int.Cl⁷ B01J21/00-38/74

Documentation searched other than minimum documentation to the extent that such documents are included in the fields searched
Jitsuyo Shinan Koho          1922-1996    Jitsuyo Shinan Toroku Koho    1996-2005
Kokai Jitsuyo Shinan Koho    1971-2005    Toroku Jitsuyo Shinan Koho    1994-2005

Electronic data base consulted during the international search (name of data base and, where practicable, search terms used)
JSTPlus(JOIS)

**C. DOCUMENTS CONSIDERED TO BE RELEVANT**

| Category* | Citation of document, with indication, where appropriate, of the relevant passages | Relevant to claim No. |
|---|---|---|
| X | JP 2002-154823 A (Toyota Central Research And Development Laboratories, Inc.), 28 May, 2002 (28.05.02), Par. Nos. [0030] to [0033] (Family: none) | 1-18,21 |
| X | JP 2001-302241 A (Sumitomo Chemical Co., Ltd.), 31 October, 2001 (31.10.01), Claims 1, 6; Par. Nos. [0008], [0010] & EP 1138634 A1          & US 2002/12628 A1 | 1-3,6-13, 16-21 |
| A | Terutaka YOKONO et al., "Nisanka Titanium Hikari Shokubai no Kashikoka to Hyomen Tokusei Seigyo", Kaiho Hikarishokubai, No.12, 10 December, 2003 (10.12.03), pages 48 to 49 | 1-21 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 June, 2005 (13.06.05) | 28 June, 2005 (28.06.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9262482 A
- JP 11290697 A
- JP 12237598 A
- WO 01010552 A